(19) **Europäisches Patentamt**

**European Patent Office**

**Office européen des brevets**

(11) **EP 1 067 743 A1**

(12) **DEMANDE DE BREVET EUROPEEN**

(43) Date de publication:
**10.01.2001 Bulletin 2001/02**

(51) Int Cl.⁷: **H04L 27/233**

(21) Numéro de dépôt: **00401896.6**

(22) Date de dépôt: **30.06.2000**

(84) Etats contractants désignés:
**AT BE CH CY DE DK ES FI FR GB GR IE IT LI LU MC NL PT SE**
Etats d'extension désignés:
**AL LT LV MK RO SI**

(30) Priorité: **07.07.1999 FR 9908823**

(71) Demandeur: **SAGEM SA**
**75116 Paris (FR)**

(72) Inventeurs:
• **Van Chau, Thai M.**
**77400 Lagny (FR)**
• **Terrec, Samuel M.**
**92130 Issy-les-Moulineaux (FR)**

(74) Mandataire: **Lapoux, Roland M.**
**Cabinet Martinet & Lapoux,**
**43 Boulevard Vauban,**
**B.P. 405,**
**Guyancourt**
**78055 Saint Quentin Yvelines Cedex (FR)**

(54) **Démodulateur MDP-4**

(57) Le démodulateur de phase dans un récepteur comprend un circuit de démodulation analogique (1) démodulant un signal analogique (IF) résultant d'une modulation de phase MDP-4 dans un émetteur. Un circuit différentiel (8) corrige chaque couple de symboles $I_k$, $Q_k$ de rang k produits par un circuit de récupération de porteuse numérique en des symboles corrigés $DI_k$, $DQ_k$ en fonction dudit couple et du couple précédent $I_{k-1}$, $Q_{k-1}$ selon les relations :

$$DI_k = Q_{k-1}(I_k + Q_k) - I_{k-1}(Q_k - I_k),$$

et

$$DQ_k = I_{k-1}(I_k + Q_k) + Q_{k-1}(Q_k - I_k) ;$$

pour s'affranchir de bruits de phase engendrés par des oscillateurs dans l'émetteur et le récepteur. Les bits de poids fort (BPF) des symboles corrigés sont appliqués à un décodeur (9).

FIG.1

EP 1 067 743 A1

## Description

La présente invention concerne un démodulateur de phase cohérent mixte, c'est-à-dire comportant en entrée une partie analogique pour la démodulation puis une partie numérique pour la récupération de porteuse, suivie d'un décodeur. Le démodulateur est inclus dans un récepteur d'un signal numérique de données modulant en phase une porteuse selon une modulation de phase MDP-4 à 4 états de phase.

Un circuit de récupération de porteuse numérique facilite avantageusement l'intégration de la plupart des moyens fonctionnels dans le démodulateur de phase, et particulièrement remédie à des moyens pour commander en tension un oscillateur. Dans la partie analogique de démodulation, cet oscillateur libre fournit une onde porteuse à une fréquence aussi proche que possible de celle de l'onde porteuse de modulation dans l'émetteur ayant émis le signal de données à modulation de phase.

Toutefois, la récupération de porteuse au moyen d'une boucle numérique à comparateurs de phase et de fréquence est tributaire des incertitudes en fréquence entre cet oscillateur local et la fréquence de porteuse initiale dans l'émetteur et plus généralement des bruits de phase engendrés par divers oscillateurs inclus dans l'émetteur et le récepteur et perturbant la porteuse. Le taux d'erreur binaire (TEB) résiduel dans le récepteur peut parfois excéder une limite normalisée.

L'invention a pour objectif de remédier aux inconvénients précités de manière à réduire l'effet des variations de phase au niveau des quatre états de phase des porteuses en quadrature d'une modulation MDP-4 à codage différentiel du type DQPSK (Differential Quadrature Phase Shift Keying), reportées dans les signaux de symbole appliqués au décodeur succédant au démodulateur de phase. L'invention améliore ainsi les performances du récepteur contenant le démodulateur.

A cette fin, un démodulateur de phase comprenant un moyen analogique à oscillateur local libre pour démoduler un signal analogique résultant d'une modulation de phase MDP-4 à 4 états d'une porteuse par un signal numérique ayant un débit inférieur à la fréquence de la porteuse, suivi de deux convertisseurs analogiques-numériques fournissant deux signaux numériques formés de symboles échantillonnés à un moyen de récupération de porteuse numérique, est caractérisé en ce qu'il comprend un moyen de correction de phase numérique pour corriger chaque couple de symboles $I_k$, $Q_k$ de rang k produits par le moyen de récupération de porteuse en des symboles corrigés $DI_k$, $DQ_k$ en fonction dudit couple et du couple de symboles $I_{k-1}$, $Q_{k-1}$ de rang précédent k-1 selon les relations suivantes :

$$DI_k = Q_{k-1}(I_k + Q_k) - I_{k-1}(Q_k - I_k),$$

et

$$DQ_k = I_{k-1}(I_k + Q_k) + Q_{k-1}(Q_k - I_k) ;$$

afin que les bits de poids fort des symboles corrigés soient appliqués à un décodeur.

De préférence, le moyen de récupération de porteuse est intégré avec le moyen de correction de phase dans un circuit intégré pour application spécifique.

Au moins deux filtres numériques ou un égaliseur numérique connectés entre les convertisseurs analogiques-numériques et le moyen de récupération de porteuse et/ou un comparateur de phase à structure numérique dans un circuit de récupération de rythme inclus dans le démodulateur de phase pour générer un signal d'horloge récupérée peuvent être intégrés dans ledit circuit intégré pour application spécifique.

D'autres caractéristiques et avantages de la présente invention apparaîtront plus clairement à la lecture de la description suivante de plusieurs réalisations préférées de l'invention en référence à la figure unique 1 qui est un bloc-diagramme d'un démodulateur de phase analogique-numérique selon l'invention.

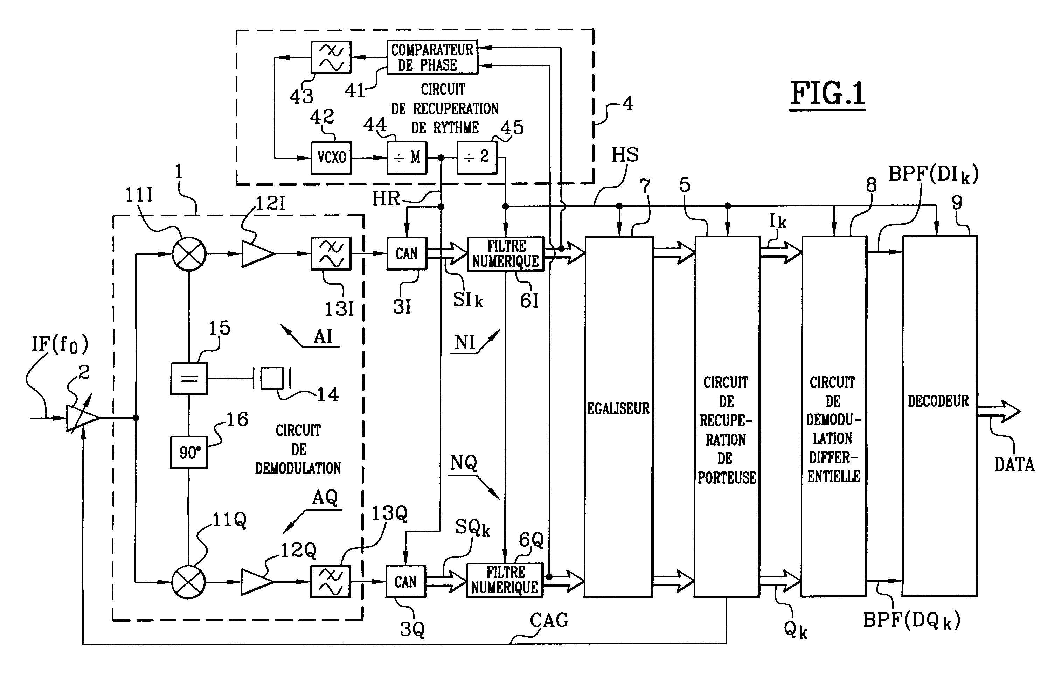

Comme montré dans cette figure 1, un démodulateur de phase cohérent dans un récepteur à radiofréquence comprend d'une manière connue en entrée, un circuit de démodulation analogique 1 entre un amplificateur d'entrée à commande automatique de gain 2 et deux convertisseurs analogiques-numériques 3I et 3Q.

Un signal analogique IF modulé à fréquence porteuse intermédiaire $f_0$ de quelques mégahertz, par exemple égale à 70 MHz, issu d'une transposition de fréquence d'un signal reçu en entrée du démodulateur de phase proprement dit, via l'amplificateur 2. Le signal modulé résulte initialement d'une modulation de phase à 4 états MDP-4 dans un émetteur à radiofréquence. La modulation MDP-4, dite également modulation QPSK (Quaternary Phase Shift Keying) en terminologie anglo-saxonne fait correspondre à un signal de données numérique ayant un débit DN de quelques Mbit/s, par exemple 2,048 à 34,368 Mbit/s, et appliqué à l'émetteur, deux trains de symboles à 2 bits. Ces deux trains sont mélangés, c'est-à-dire subissent un codage différentiel dans le modulateur MDP-4 comme les deux composantes en quadrature de phase I et Q d'une même porteuse. La fréquence de cette porteuse est supérieure à la fréquence d'échantillonnage des données.

Le circuit de démodulation 1 sépare les deux composantes en quadrature de phase dans deux voies analogiques parallèles AQ et AI qui sont prolongées par des voies numériques NQ et NI au-delà des convertisseurs 3Q et 3I dans le démodulateur. Dans chacune des voies analogiques AQ et AI sont inclus en cascade un mélangeur 11I, 11Q recevant à une première entrée le signal modulé IF amplifié par l'amplificateur à gain variable 2, un amplificateur 12I, 12Q et un filtre passe-bas 13I, 13Q.

Chaque mélangeur 11Q, 11I fait office de démodulateur et démodule le signal modulé IF à fréquence intermédiaire $f_0$ amplifié par l'amplificateur à gain variable 2, en deux signaux analogiques en bande de base, correspondant aux deux signaux de symbole modulant les deux composantes en quadrature de phase de la porteuse dans l'émetteur. La démodulation de phase est réalisée grâce à un oscillateur local 14 à quartz oscillant sensiblement à la fréquence $f_0$. La sortie de l'oscillateur est reliée à la deuxième entrée du mélangeur 11I à travers un coupleur 15 et à la deuxième entrée du mélangeur 11Q à travers le coupleur 15 et un déphaseur de 90° 16. En pratique, ce type de démodulateur permet l'utilisation dans l'émetteur comme dans le récepteur, d'oscillateurs calés à des fréquences relativement faibles, suivis de doubleur voire de tripleur de fréquence, réduisant ainsi le coût de la partie à radiofréquence, typiquement 23 à 38 Gigahertz.

Les signaux analogiques sortant des mélangeurs 11I et 11Q sont appliqués respectivement aux entrées des convertisseurs analogiques-numériques 3I et 3Q après avoir été amplifiés par les amplificateurs 12I et 12Q et filtrés par les filtres 13I et 13Q. Les filtres 13I et 13Q limitent le bruit en bande de base dans la bande de Nyquist du signal.

Un signal d'horloge récupéré à la fréquence d'échantillonnage HR est appliqué par un circuit de récupération de rythme programmable 4 à des entrées d'horloge d'échantillonnage des convertisseurs 3I et 3Q de manière à échantillonner numériquement les signaux démodulés, amplifiés et filtrés en sortie des filtres 13I et 13Q pour fournir des signaux de symbole numériques $SI_k$ et $SQ_k$ à la fréquence de symbole récupérée par le circuit 4, k étant un indice entier indiquant le rang des symboles dans le signal reçu. Dans une partie numérique du démodulateur, les signaux numériques $SI_k$ et $SQ_k$ sont appliqués à un circuit de récupération de porteuse numérique 5 respectivement à travers des filtres adaptés numériques en racine de Nyquist 6I et 6Q.

Le circuit de récupération de rythme 4 est structuré en boucle d'asservissement de phase comprenant un comparateur de phase 41, un oscillateur à quartz (VCXO) 42 commandé en tension par la sortie du comparateur de phase à travers un filtre passe-bas de boucle 43, et un diviseur de fréquence par un entier M 44 et un diviseur de fréquence par deux 45 reliés en série à la sortie de l'oscillateur. Les trains de symboles $SI_k$ et $SQ_k$ sont filtrés par les filtres 6I et 6Q avant d'entrer dans un égaliseur adaptatif 7. Un prélèvement de signal filtré dans les deux voies est appliqué aux entrées du comparateur de phase 41.

De préférence, le comparateur de phase 41 a une structure numérique de type Gardner.

Par calcul de l'erreur quadrature moyenne, le comparateur de phase 41 élabore un signal représentatif de l'erreur de phase existant entre les signaux filtrés $SI_k$ et $SQ_k$, en tant que signal de commande, à l'oscillateur 42 à travers le filtre de boucle 43. Par exemple pour une modulation MDP-4 à 4 états d'un signal numérique de données à 2 x 2,048 Mbit/s, la fréquence de l'oscillateur 42 est très élevée, de l'ordre de 40 MHz, et l'entier M est de l'ordre de 16 pour une fréquence d'échantillonnage HR de l'ordre de 4 MHz ou une fréquence de symbole HS de 2 MHz, soit deux échantillons parallèles pour un symbole. Le signal d'horloge de symbole HS ainsi récupéré suit ainsi les variations de la fréquence de symbole dans le modulateur. Avant division par deux dans le diviseur 45, le signal HR est appliqué aux entrées d'horloge d'échantillonnage des convertisseurs analogiques-numériques 3I et 3Q pour échantillonner au double de la fréquence de symbole les signaux analogiques amplifiés et filtrés dans les voies AI et AQ.

Le circuit de récupération de porteuse numérique 5 comporte deux entrées reliées aux sorties des filtres adaptés 6I et 6Q de préférence respectivement à travers l'égaliseur adaptatif 7. Un algorithme d'adaptation aux caractéristiques du milieu de transmission entre l'émetteur et le récepteur est mis en oeuvre dans l'égaliseur pour éliminer des distorsions en amplitude et phase dans le signal modulé.

Afin de miniaturiser le démodulateur et réduire son coût, les filtres numériques 6I et 6Q, l'égaliseur 7 et le circuit de récupération de porteuse 5 ainsi que le comparateur de phase numérique 41 sont sous la forme d'un circuit intégré programmable pour application spécifique (ASIC).

Le circuit de récupération de porteuse 5 compare les phases entre la constellation en sortie de l'égaliseur 7 et une constellation de référence.

Le faible écart de fréquence entre la fréquence porteuse du signal à fréquence intermédiaire IF et la fréquence de l'oscillateur 14 entraîne une erreur de phase. Elle est compensée numériquement dans le circuit 5 par rapport à la fréquence zéro en calculant une erreur de phase pour ainsi mettre en phase la constellation formée par les signaux filtrés et égalisés $SI_k$ et $SQ_k$ sur ses deux axes en tournant convenablement de l'erreur de phase la constellation des états de phase. Le circuit 5 produit normalement deux trains de symbole numérique $I_k$ et $Q_k$, chacun sous forme de mots d'échantillon à 2 bits parallèles à la fréquence de symbole.

En outre, le circuit 5 commande par un signal de commande automatique de gain CAG le gain dans l'amplificateur d'entrée 2.

Les signaux récupérés $I_k$ et $Q_k$ en sortie du circuit 5 présentent un bruit de phase qui se traduit par une sensible oscillation de la position des quatre états de phase dans le diagramme des phases. Le bruit de phase provient essentiellement de la multiplication en fréquence des oscillateurs inclus dans les étages du modulateur et de transposition de fréquence de l'émetteur et les étages de transposition de fréquence et l'étage de démodulation, le démodulateur de phase en question, dans le récepteur, les sauts de fréquence étant attribués principalement aux variations de température. Le bruit de phase entraîne une dégradation hors tolérance des taux d'erreurs binaires dans le signal de données DATA fourni par un décodeur 9 relié, selon la technique antérieure, directement aux deux bus de sorties du circuit de récupération de porteuse 5.

Selon l'invention, le démodulateur de phase comprend encore un circuit de démodulation différentielle ou transitionnelle numérique 8 qui reçoit par deux ports d'entrées deux mots d'échantillon consécutifs $I_k$ et $I_{k-1}$ du signal à porteuse en phase $SI_k$ filtré et égalisé et deux mots d'échantillon consécutifs $Q_k$ et $Q_{k-1}$ du signal à porteuse en quadrature $SQ_k$. Les mots d'échantillon $I_k$ et $Q_k$ d'un couple sont fournis en parallèle par des bus de sortie du circuit de récupération de porteuse 5 et sont mémorisés dans une mémoire tampon dans le circuit 8 au rythme de l'horloge de symbole HS. Le circuit 8 est un circuit logique satisfaisant les deux relations logiques suivantes exprimant une décision différentielle :

$$DI_k = Q_{k-1}(I_k + Q_k) - I_{k-1}(Q_k - I_k),$$

et

$$DQ_k = I_{k-1}(I_k + Q_k) + Q_{k-1}(Q_k - I_k) ;$$

où $DI_k$ et $DQ_k$ sont deux mots d'échantillon différentiels établis par le circuit 8. Ces deux relations logiques contribuent à réduire l'influence du bruit de phase et éviter les sauts de phase entraînant des pertes de séquence. L'effet du bruit de phase autour des quatre états de phase est atténué puisque le premier mot d'échantillon de symbole corrigé $DI_k$ du symbole de rang k dépend de la différence des produits de transition $Q_{k-1}(I_k + Q_k)$ et $I_{k-1}(Q_k - I_k)$ de l'un des mots d'échantillon $Q_{k-1}$ et $I_{k-1}$ du symbole précédent de rang k-1 respectivement par les somme et différence des deux mots d'échantillon du symbole de rang k, tandis que le deuxième mot d'échantillon de symbole corrigé $DQ_k$ du symbole de rang k dépend de la somme de tels produits.

Le circuit de démodulation différentielle 8 est entièrement numérique et est intégré avec les autres circuits 6I et 6Q, 7, 41, 44, 45, 5 et 9 dans un circuit intégré ASIC.

Le décodeur 9 décode les signaux $DI_k$ et $DQ_k$ en comparant à des seuils de décision les bits de poids fort BPF de ces signaux afin de produire un signal de données récupérées DATA.

## Revendications

1. Démodulateur de phase comprenant un moyen analogique (1) à oscillateur local libre (14) pour démoduler un signal analogique (IF) résultant d'une modulation de phase à 4 états, suivi de deux convertisseurs analogiques-numériques (3I, 3Q) fournissant deux signaux numériques formés de symboles échantillonnés ($SI_k$, $SQ_k$) à un moyen de récupération de porteuse numérique (5), caractérisé en ce qu'il comprend un moyen de correction de phase numérique (8) pour corriger chaque couple de symboles $I_k$, $Q_k$ de rang k produits par le moyen de récupération de porteuse en des symboles corrigés $DI_k$, $DQ_k$ en fonction dudit couple et du couple de symboles $I_{k-1}$, $Q_{k-1}$ de rang précédent k-1 selon les relations suivantes :

$$DI_k = Q_{k-1}(I_k + Q_k) - I_{k-1}(Q_k - I_k)$$

et

$$DQ_k = I_{k-1}(I_k + Q_k) + Q_{k-1}(Q_k - I_k),$$

afin que les bits de poids fort (BPF($DI_k$), BPF($DQ_k$)) des symboles corrigés soient appliqués à un décodeur (9).

2. Démodulateur de phase conforme à la revendication 1, dans lequel le moyen de récupération de porteuse (5) est intégré avec le moyen de correction de phase (8) dans un circuit intégré pour application spécifique.

3. Démodulateur de phase conforme à la revendication 2, dans lequel au moins deux filtres numériques (6I, 6Q) ou un égaliseur numérique (7) connectés entre les convertisseurs analogiques-numériques (3I, 3Q) et le moyen de récupération de porteuse (5) sont intégrés dans ledit circuit intégré pour application spécifique.

4. Démodulateur de phase conforme à la revendication 2 ou 3, dans lequel un comparateur de phase (41) dans un circuit de récupération de rythme (4) inclus dans le démodulateur de phase pour générer un signal d'horloge récupérée (HR) a une structure numérique et est intégré dans ledit circuit intégré pour application spécifique.

FIG.1

EP 1 067 743 A1

**Office européen des brevets**

**RAPPORT DE RECHERCHE EUROPEENNE**

Numéro de la demande

EP 00 40 1896

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | EP 0 778 677 A (COMMISSARIAT ENERGIE ATOMIQUE) 11 juin 1997 (1997-06-11) * colonne 9, ligne 12 - ligne 53 * * revendications * | 1-4 | H04L27/233 |
| A | EP 0 848 523 A (COMSTREAM CORP) 17 juin 1998 (1998-06-17) * abrégé * * revendications * * figure 2 * | 1-4 | |
| A | EP 0 449 146 A (JAPAN RADIO CO LTD) 2 octobre 1991 (1991-10-02) * revendications * * figure 1 * | 1-4 | |
| A | FR 2 680 923 A (VANDAMME PATRICK ;KERVAREC JOELLE (FR); LECLERT ALAIN (FR)) 5 mars 1993 (1993-03-05) * revendications * * figure 2 * | 1-4 | |

**DOMAINES TECHNIQUES RECHERCHES (Int.Cl.7)**

H04L

Le présent rapport a été établi pour toutes les revendications

| Lieu de la recherche | Date d'achèvement de la recherche | Examinateur |
|---|---|---|
| LA HAYE | 9 octobre 2000 | Koukourlis, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EP 1 067 743 A1

**ANNEXE AU RAPPORT DE RECHERCHE EUROPEENNE**
**RELATIF A LA DEMANDE DE BREVET EUROPEEN NO.**  EP 00 40 1896

La présente annexe indique les membres de la famille de brevets relatifs aux documents brevets cités dans le rapport de recherche européenne visé ci-dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

09-10-2000

| Document brevet cité au rapport de recherche | | Date de publication | Membre(s) de la famille de brevet(s) | | Date de publication |
|---|---|---|---|---|---|
| EP 0778677 | A | 11-06-1997 | FR | 2742014 A | 06-06-1997 |
| | | | CA | 2191551 A | 05-06-1997 |
| | | | US | 5799035 A | 25-08-1998 |
| EP 0848523 | A | 17-06-1998 | US | 5550869 A | 27-08-1996 |
| | | | AT | 183869 T | 15-09-1999 |
| | | | AU | 716743 B | 02-03-2000 |
| | | | AU | 4933297 A | 05-03-1998 |
| | | | AU | 682336 B | 02-10-1997 |
| | | | AU | 5961594 A | 15-08-1994 |
| | | | BR | 9305988 A | 21-10-1997 |
| | | | CA | 2130269 A | 21-07-1994 |
| | | | CN | 1092231 A | 14-09-1994 |
| | | | CZ | 9401975 A | 15-02-1995 |
| | | | CZ | 9702794 A | 14-10-1998 |
| | | | CZ | 9702795 A | 14-10-1998 |
| | | | CZ | 9702796 A | 14-10-1998 |
| | | | DE | 69326140 D | 30-09-1999 |
| | | | DE | 69326140 T | 20-04-2000 |
| | | | EP | 0628229 A | 14-12-1994 |
| | | | HU | 68003 A | 29-05-1995 |
| | | | JP | 7508389 T | 14-09-1995 |
| | | | NO | 943189 A | 28-10-1994 |
| | | | NZ | 261042 A | 26-07-1996 |
| | | | PL | 305556 A | 23-01-1995 |
| | | | PL | 175825 B | 26-02-1999 |
| | | | RU | 2128399 C | 27-03-1999 |
| | | | WO | 9416505 A | 21-07-1994 |
| EP 0449146 | A | 02-10-1991 | JP | 3274844 A | 05-12-1991 |
| | | | CA | 2038920 A | 25-09-1991 |
| | | | US | 5097220 A | 17-03-1992 |
| FR 2680923 | A | 05-03-1993 | DE | 69215298 D | 02-01-1997 |
| | | | DE | 69215298 T | 07-05-1997 |
| | | | EP | 0530107 A | 03-03-1993 |
| | | | JP | 5211536 A | 20-08-1993 |
| | | | US | 5301210 A | 05-04-1994 |

EPO FORM P0460

Pour tout renseignement concernant cette annexe : voir Journal Officiel de l'Office européen des brevets, No.12/82

7